# EUROPEAN PATENT SPECIFICATION

(11) **EP 3 541 218 B1**
(45) Date of publication and mention of the grant of the patent: **14.09.2022**
(21) Application number: 17798251.9
(22) Date of filing: 20.11.2017
(51) Int. Cl.: A41D 27/24, B29C 65/48, B29C 65/50, B29C 65/62, B29C 65/00

(54) **SEAM SEAL AND METHOD FOR FORMING THE SAME ON STRETCH DENIM AND OTHER FABRIC PRODUCTS**
NAHTDICHTUNG UND VERFAHREN ZU DESSEN HERSTELLUNG AUF ELASTISCHEN DENIM- UND ANDEREN GEWEBEPRODUKTEN
SOUDURE DE COUTURE ET SON PROCÉDÉ DE FORMATION SUR TISSU DENIM STRETCH ET AUTRES PRODUITS TEXTILES

(30) Priority: 21.11.2016 EP 16199807
(43) Date of publication of application: 25.09.2019
(73) Proprietor: Sanko Tekstil Isletmeleri San. Ve Tic. A.S., 16400 Inegol - Bursa (TR)
(72) Inventor: MERT, Serkan, 16400 Inegol - Bursa (TR); CESIT, Alper, 16400 Inegol - Bursa (TR)
(74) Representative: Gislon, Gabriele
(86) International application number: PCT/EP2017/079794
(87) International publication number: WO 2018/091709

(56) References cited:
- WO-A1-2004/091902
- FR-A1- 2 873 545
- KR-A- 20120 005 688
- US-A1- 2008 196 136

## Description

### TECHNICAL FIELD

The disclosure relates, most generally, to fabrics and garments, and methods for producing the same, and more particularly to a method for forming and sealing a seam or a hem formed in a stretchable denim or other fabric.

### BACKGROUND

Stretch type fabrics with elastomeric yarns have become very popular and useful in today's garment producing industry. The garments formed with such yarns, are very popular in sportswear and athletic uniforms and apparel, but also find application in various other types of fashion clothing because these stretch type fabrics produce form fitting garments, provide additional comfort and are very useful where a tight-fitting garment is needed or desirable. Many stretch type fabrics include a combination of elastomeric and other fibers to provide a particular feel and texture. The elastomeric, i.e. elastic fibers are fibers that are capable of stretching to a length greater than their original length and then recovering to their original length.

Even though there are many stretch type fabrics and garments available, many of them lack good elasticity or are not sufficiently resilient. Various stretchable fabrics and garments lose their elasticity in time and tend to sag and crack and become nonfunctional. Furthermore, garments are produced by forming seams by joining panels and pieces of the stretch type fabric together, and the seams and the areas around the seams, are particularly prone to defects.

When forming seams in stretch type fabrics, many problems can arise. Defects can be created when forming a seam of stretch type fabrics due to sewing and this type of problem is sometimes referred to as "lycra damage." Lycra ^{®} is a trademark identifying a material used for making elastic yarns. In some cases, problems result because the wrong type of sewing needle is used or because excessive foot sewing machine pressure is used in the sewing process. In some cases, the fabric structure is too loose and the stoppers of the sewing machine cannot stop the fibers from moving towards the inside of fabric during the sewing process. Problems can also arise during washing steps such as softening steps, or during drying or other oven stages that are carried out improperly.

Another problem created when forming a seam in stretch type fabrics is referred to as "lycra slippage." Generally speaking, lycra slippage refers to the phenomenon in which elastomeric fibers pull back from the seam and do not recover to their original position. Under stress, the fibers forming the fabric experience various different friction forces that may damage the elastic fibers such that they do not recover to their original position or such that the elastic fibers can become disengaged from the seam. This is also true and especially problematic when fabrics with both elastic and inelastic fibers forming elastic and inelastic yarns are used. The elastomeric and inelastic fibers have different friction coefficients and different moduli of elasticity. In this example, seam slippage occurs under stress because some of the elastic fibers are stretched and have a strong recovery capability while other of the fibers do not have a strong recovery capability. Some of the fibers slip away from the seam and through the garment. Further, depending on the location of the seam within the garment, portions of the seam may experience more stretching than other portions of the seam and this inconsistency along the seam itself can create a severe slippage problem and one that varies along the length of the seam.

It would be desirable to provide stretch type fabrics with defect-free seams that remain defect free in time.

One previous attempt to address this problem is provided in US patent publication 2008/0196136 in which two pieces of fabric are joined together by welding and in which a laminate strip is joined to the welded seam by gluing. Another reference, WO2004/091902 provides a waterproof seam formed between two pieces of fabric but in WO2004/091902 the fabric itself is a laminated fabric in which the fibers of the fabric are not susceptible to the described problems such as slippage, because the fibers of the fabric are already laminated in place as they are affixed to a laminate sheet.

Document KR20120005688A discloses a method for forming a seam in a woven fabric including natural fibers, such as denim, wherein two pieces of fabrics are sewn together by means of overlapping the free edges of said two pieces of fabrics and covering the so obtained joined edges with a third piece of fabric, which is subsequently sewn to the joined two fabric pieces.

### SUMMARY

The present disclosure solves the preceding by problems and provides methods for forming and sealing a seam in a fabric such as denim, stretchable denim, or other fabrics that include elastic fibers and inelastic fibers. The present disclosure also relates to methods for forming and sealing a hem in a denim or other fabric. The present disclosure also relates to the seams and hems formed as such. An object of the present invention is a method according to claim 1. Another object of the invention is a garment according to claim 14.

A method for forming a seam comprises providing a woven fabric including a plurality of fibers including elastic fibers. The plurality of fibers includes elastic and natural materials. The woven fabric may include inelastic yarns, elastic yarns and yarns that include an elastomeric core and an inelastic sheath covering. The woven fabric is not a laminated fabric i.e. the elastic and inelastic fibers are free to move relative to one another because they are not adhered to a laminate sheet. The fabric is a single layer of material. The single layer of fabric material is uncoated and unlaminated. The method also provides for securing together an edge of a piece of the woven fabric to a second piece of fabric, to form a seam. A third piece of fabric is laminated with an adhesive material which may have a backing sheet and then a strip of the third piece of fabric is formed by cutting the third piece of fabric and sealing edges of the strip. In some embodiments, the three pieces of fabric are the same material. The method further provides for removing a backing sheet from the strip, if present, then disposing the strip along the seam; and affixing the strip to the seam using pressure and heat to prevent slippage of elastic fibers away from the seam of the fabric.

According to other embodiments, a hem is formed in a garment or a fabric and the strip of fabric with the laminated adhesive material is disposed over, and then joined to, the hem to prevent slippage of elastic fibers away from the hem. Suitable adhesives that may be used are those that can penetrate the fabric forming the seam or hem to an extent sufficient to adhere to both the fabric and the elastic fibers of the yarns. As a result, the elastic fibers are held in place and no slippage occurs. Examples of suitable adhesives are hot-melt adhesives (HMA) and hot-melt adhesives that are also pressure-sensitive adhesives (HMPSA). In one embodiment, the adhesive is in the form of a strip with both sides adhesive. The strip may be attached to a strip of fabric and subsequently to the seam. Adhesives and adhesive strips are known in the art.

The method advantageously produces a sealed seam or hem in which the elastic fibers of the fabric that extend to the seam or hem, are glued together and/or to the other fibers to ensure that the fibers do not pull away from the seam or hem as formed.

Also disclosed are the various garments formed by joining together pieces of fabric to form the sealed seams and sealed hems according to the disclosure. The garments so produced are formed to advantageously include seams and hems that are defect free.

### BRIEF DESCRIPTION OF THE DRAWING

The present invention is best understood from the following detailed description when read in conjunction with the accompanying drawing. It is emphasized that, according to common practice, the various features of the drawing are not necessarily to scale. On the contrary, the dimensions of the various features may be arbitrarily expanded or reduced for clarity. Like numerals denote like features throughout the specification and drawing.
Figure 1 is a flow chart showing a method for forming and sealing a seam in a fabric according to various embodiments of the disclosure;
Figure 2 is a plan view of a panel of fabric used to form a seam, according to various embodiments of the disclosure;
Figure 3 is a cross-sectional view showing an adhesive laminated on a fabric strip to be joined to a seam of a fabric according to various embodiments of the disclosure;
Figures 4-6 are each cross-sectional views schematically showing a step in the process for forming and sealing a seam in accordance to various embodiments of the disclosure;
Figure 7 is a cross-sectional view schematically showing a step in the process for forming and sealing a hem according to various embodiments of the disclosure; and
Figure 8 is a cross sectional view showing a sealed seam according to various embodiments of the disclosure.

### DETAILED DESCRIPTION

The present disclosure relates to a method for forming and sealing seams and hems in fabrics and garments. The disclosure finds particular application in the field of woven fabrics such as stretchable denim fabrics that include both elastic and inelastic fibers, but is applicable to the formation and sealing of seams and hems for any type of fabric or garment.

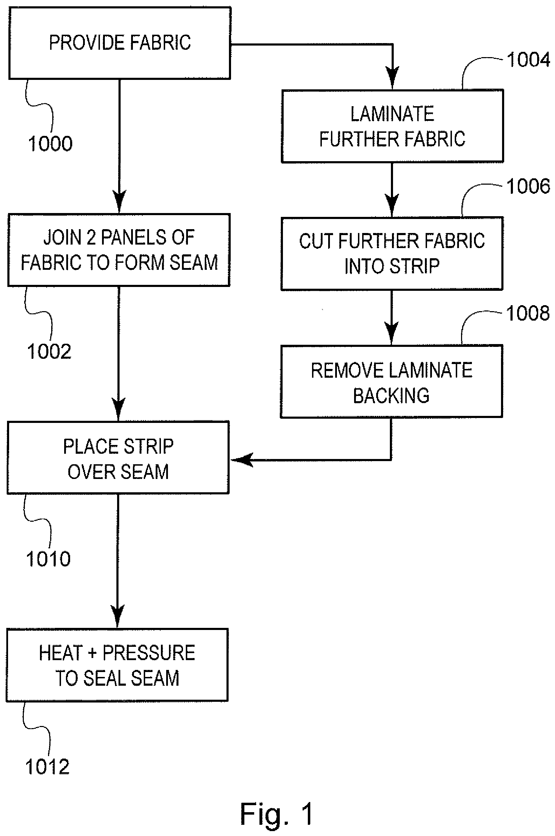

Figure 1 is a flow chart illustrating an overview of a method according to various embodiments of the present disclosure. Further details of the method and the fabrics appear below in conjunction with the subsequent figures. Referring to Figure 1, at step 1000, a fabric is provided. The fabric includes inelastic fibers. In some embodiments, the fabric includes inelastic and elastic fibers, and may be denim. In other embodiments, other fabrics may be used. The method provides for forming a seam or hem in the fabric. At step 1002, two panels of fabric are joined together to form a seam. In some embodiments, two panels or pieces of the same fabric material are joined together. At step 1004, an adhesive is laminated on a further piece of fabric. The adhesive includes a backing strip. At step 1006, the laminated piece of fabric is cut into an elongate strip. At step 1008, the backing strip is removed from the laminated piece of fabric and at step 1010, the elongate strip is placed over the seam. At step 1012, heat and pressure are used to seal the seam by affixing the elongate strip to the seam.

In other embodiments, instead of joining together two panels of the fabric at step 1002, a hem is formed at the edge of a piece of fabric and the elongate strip formed at step 1006 is placed over the hem at step 1010 and then used seal the hem at step 1012.

According to either the seam or hem embodiment, the disclosure provides the advantage of a sealed seam or hem resistant to fibers pulling away from the seam or hem and resistant to other defects.

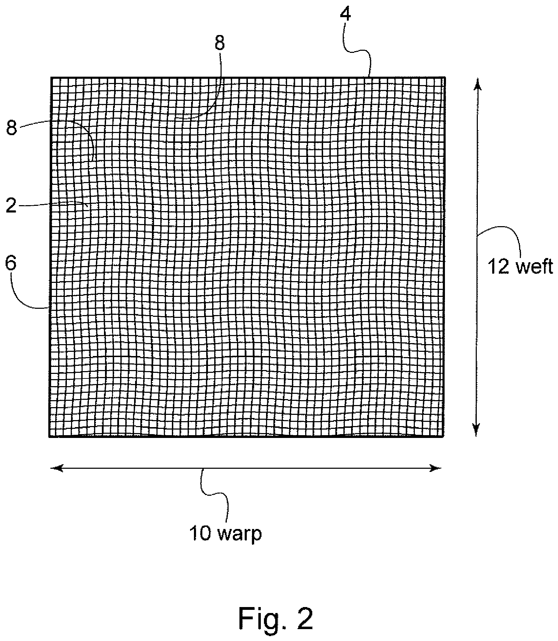

Figure 2 shows a plan view of a fabric that may be used according to various aspects of the disclosure. Fabric 2 is a stretchable fabric and fabric 2 is a woven fabric according to various aspects of the disclosure. Fabric 2 may be any type of stretchable fabric, namely stretchable denim as known in the art. Fabric 2 may advantageously be stretchable denim according to various advantageous embodiments. Fabric 2 includes elastic materials and embodiments, is formed of both inelastic and elastic yarns. Fabric 2 is a single ply material and is an uncoated and unlaminated single layer of fabric. Fabric 2 includes edges 4 and 6 in the illustration of Figure 2. Woven fabric 2 includes fibers 8 extending in both the warp 10 and weft 12 directions. Fibers 8 may represent various fibers and may include fibers formed into various yarns that include multiple fibers or yarns formed of a single fabric type. Fibers 8 of fabric 2 include inelastic and elastic fibers. Fabric 2 is a woven fabric with inelastic and elastic fibers, and may be stretchable denim. Figure 2 shows fibers 8 generally extending in the warp 10 and weft 12 directions and generally orthogonal to one another but other arrangements may be used in other embodiments. Fabric 2 includes elastic fiber in at least one of the warp 10 and weft 12 directions and is stretchable, i.e. capable of elongation in response to any of various stresses, in at least one of the warp 10 and weft 12 directions. Furthermore, Figure 2 shows that edges 4 and 6 are generally orthogonal to the directions of fibers 8 and therefore the warp 10 and weft 12 directions, but other arrangements with other angles may be used in other embodiments. In other words, fabric 2 may be cut at various angles with respect to the warp 10 and weft 12 directions of fibers 8, to form edges 4 and 6. Edges 4 and 6 are therefore always non-parallel to the fibers 8 extending along at least one of the warp 10 and weft 12 directions and fibers 8 therefore include ends that are exposed and terminate, at edges 4 and 6. The disclosure provides methods and techniques such that when an edge is formed in a panel of fabric such as edge 4 or 6 of fabric 2, the fibers 8 that intersect that edge, orthogonally or at any other angle, do not pull back from that edge when a seam or hem is formed. This is particularly advantageous when fabric 2 is a singly ply fabric that is uncoated and unlaminated such that the fibers are not adhered to a laminate layer and are therefore susceptible to such pull back. Even according to such embodiments, the disclosure provides the advantage of a sealed seam or hem resistant to fibers pulling away from the seam or hem and resistant to other defects.

Fibers 8 extending in the warp 10 direction and fibers 8 extending in the weft 12 directions may include both inelastic and elastic fibers. In some embodiments, both inelastic and elastic fibers extend in both the warp 10 and weft 12 directions. The elastomeric material may be cast into mono-filaments and/or into staple fibers, i.e. natural fibers such as raw cotton, wool, hemp, flax, that may be twisted to form a yarn. In other words, the elastomeric materials may be utilized as-is or together with other fibers in a yarn. In some embodiments, fibers 8 are formed as yarns and in some embodiments, the yarns are elastic yarns that include an elastic core of one or more elastic fibers with an inelastic sheath covering the core. The inelastic sheath may be formed of cotton or other natural materials and in some embodiments, the inelastic sheath may be formed of synthetic materials. Core-spun and ring spun technologies are known and widely used processes in the textile industry, and involve combining two or more fibers with different features, to form one yarn member. These and various other methods for spinning fibers to produce a yarn may be used. Various methods for forming a yarn by combining a stretchable core including one or multiple fibers that have elastic properties, with an insulating sheath covering, are provided in US patent application Publ. No. 201 3/0260129.

In some elastic core yarn embodiments, the core may include a bundle of one or multiple fibers, some or all of which are elastic. The fibers that make up the core may be connected together by twisting, intermingling or co-extrusion. In some embodiments in which the fibers are intertwined, they can be intertwined to various degrees. The elastomeric core is characterized by excellent recovery and resiliency properties provided by one or more of the core fibers.

The elastic yarns are used to produce stretchable types of woven fabrics used for various types of garments including stretchable denim. In various embodiments, the elastic fibers may be formed of the same or different material and may have the same or different degrees of elasticity. In some embodiments, one of the fibers may be stretchable to a length of 400% of its original length and one of the other fibers may be less elastic but stretchable to about 20% of its original length. In some embodiments, the elastic fibers are thermoplastics. In some embodiments, thermoplastic elastomers and thermoplastic polyurethanes (TPU) having a well-combined structure of soft and hard building segments that provides exceptional elasticity, are used. Various elastic polyurethane materials, collectively referred to as elastanes, may be used. In such embodiments, the two segments may be advantageously based on polyethers having low glass transition temperatures, T_{g}. In various other embodiments, other elastomeric materials and other arrangements are used to form the elastic fibers that form fibers 8 which may be in the form of fibers or as the core fibers of a yarn. Commercially available materials such as T-400 lycra (a polyurethane based co-polymer) and other polyurethane based copolymers, and/or PBT-based (PolyButylene-Terephthalate) polymers and/or co-polymer materials may be used as the elastomeric material in various embodiments. Some commercial examples of elastomeric fibers that may be used include but are not limited to, Dowxla, Dorlastan (Bayer, Germany), Lycra (Dupont, USA), Clerrspan (Globe Mfg. Co., USA), Glospan (Globe Mfg. Co., USA), Spandaven (Gomelast C.A, Venezuela), Rocia (Asahi Chemical Ind., Japan), Fujibo Spandex (Fuji Spinning, Japan), Kanebo LooBell 15 (Kanebo Ltd., Japan), Spantel (Kuraray, Japan), Mobilon (Nisshinbo Industries), Opelon (Toray-DuPont Co. Ltd.), Espa (Toyoba Co.), Acelan (Teakwang Industries), Texlon (Tongkook Synthetic), Toplon (Hyosung), Yantai (Yantai Spandex), Linel, Linetex (Fillatice SpA). These and other fibers may be chosen for providing generally good elastic properties and high stretchability. Polyolefin fibers may also be used. Still various other types of commercially available elastic fibers, and other elastic fibers being developed, may be used as the elastic fibers according to the disclosure.

The respective fibers may be connected together in various manners to form the fabric. In various embodiments, multiple elastic fibers may be intermingled with man-made fibers, twisted single ply or two ply with man-made fibers or twisted single ply or two ply with natural fibers, or air jet texturized (AJT) with man-made fibers. In some embodiments, one or multiple elastic fibers may be simultaneously extruded, i.e. co-extruded, with man-made fibers.

According to the various embodiments described above, including embodiments of yarns with elastomeric cores and inelastic sheath coverings and other embodiments in which a plurality of fibers are used including both inelastic and elastic fibers, various mixtures of fibers may be used. In some embodiments, the fibers extending in the warp 10 direction, or the weft 12 direction, or both, include elastic fibers and inelastic natural fibers such as cotton. The inelastic fibers may also be fibers such as wool, polyester, rayon, nylon and other suitable materials that provide a natural look and a natural feel to the yarn Other suitable natural or synthetic materials such as all types of regenerated celluloses, hemp, flax, jute, kenaf, sisal, banana, agave, bamboo, poly(ethylene terephthalate), poly(butylene terephthalate), poly(vinylidene fluoride), polyamide 6, polyamide 66, polypropylene, polyethylene, poly(acrylonitrile), poly(lactide) or mixtures thereof may be used in other embodiments. In one advantageous embodiment, cotton staple fibers are used to form a denim fabric. Various combinations of the previous materials may also be used for the fibers.

In some embodiments, fabric 2 is a woven fabric that includes both elastic and inelastic fiber materials and in which the inelastic fiber materials make up the majority of fabric 2, including yarn embodiments in which an elastic core is surrounded by an inelastic sheath formed of natural materials. In some embodiments, fabric 2 includes elastic yarns and natural yarns formed of a single material. In some embodiments, the fabric includes yarns formed only of inelastic fibers. In some embodiments, fabric 2 is a woven fabric that includes at least about 65% natural fibers. In one embodiment, the fabric includes 65% cotton and 35% of various elastic fibers. In one embodiment, the fabric includes 65% cotton and 35% lycra or other elastic polyurethanes. In other embodiments, fabric 2 is a woven material with the elastic materials forming 5-50% of the fabric. In some embodiments, fabric 2 is a single ply woven material with the elastic materials forming 5-50% of the fabric and cotton or other natural inelastic fibers forming the balance. The woven fabric material provides the advantage of stretchability along with a comfortable textured appearance and feel. Fabric 2 is therefore susceptible to slippage and pull-back of fibers, particularly the elastic fibers, from a seam if not for the present invention. In some embodiments, fabric 2 is a single ply layer of material, that is, a single layer of fabric not including other layers or films such as coatings or laminates to which both the elastic and inelastic fibers are adhered and therefore not susceptible to movement with respect to one another, i.e. slippage. Fabric 2 of the invention is a single ply material layer without coatings or laminates and in which the elastic and inelastic fibers could move or slip relative to one another if not for the seam provided according to the invention.

In some embodiments of the disclosure, pieces or panels of fabric 2 are joined together to form seams to produce various garments and other products. The garments formed of the stretchable fabric include various types of shirts, pants, tights, caps, shorts and various other types of workout apparel and other fashion apparel. The stretchable fabric may also be used to form a sleeve, a compression sock, or various bands or items worn on various locations on a wearer's body. Various other end products may be formed by joining together pieces of fabric 2.

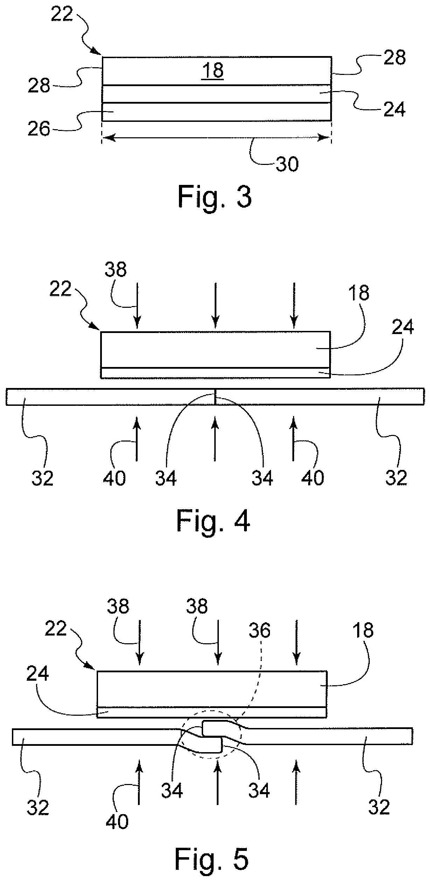

According to embodiments of the disclosure, two pieces of fabric are joined together to form a seam. In some embodiments, two pieces of fabric such as fabric 2 shown in Figure 2, are joined together. In some embodiments, the piece of fabric 2 shown in Figure 2 is joined to an identical or similar piece of fabric such as along edge 4 or along edge 6, to form a seam. In some embodiments, fabric 2 shown in Figure 2, may be cut into multiple pieces that will be joined together in various arrangements to form a garment and these pieces are joined together. In other embodiments, two different types of fabrics are joined together to form a seam with one or both of the fabrics being a woven fabric with both elastic and inelastic fibers such as fabric 2. The various arrangements will be shown and discussed in conjunction with Figures 4 - 6.

Figure 3 shows a cross-section of a laminated strip of fabric according to embodiments of the disclosure. Fabric strip 22 may be any type of fabric but in one advantageous embodiment, fabric 18 of fabric strip 22 is identical or very similar to the fabric it will be used to seal. As such, in some embodiments in which the fabric strip 22 is used to seal a seam formed from fabric 2 of Figure 2, fabric 18 may be identical to fabric 2. In some embodiments, a large sample of fabric is cut into panels that will be joined together and further cut into another piece of fabric 18 that will have an adhesive applied thereto and which will be used to form fabric strip 22 to seal the seam formed of the panels. The piece of fabric 18 lined with the adhesive 24, is then cut into thin strips to form fabric strip 22 shown in Figure 3. Prior to being cut into fabric strip 22, the fabric may be of any dimension and includes adhesive 24 and backing sheet 26. In some embodiments, the adhesive 24 and backing sheet 26 are laminated onto the fabric 18 used to form fabric strip 22, but other methods may be used to apply adhesive 24 to fabric 18 in other embodiments. In some embodiments, an adhesive tape is used and applied to fabric 18 by laminating. In one embodiment, adhesive tape 3400N, produced by Bemis Associates is applied to fabric 18 using a temperature in the range of about 120° C to 130° C with a dwell time of about 5 to 10 seconds and at a pressure of about 2.8 to about 4.2 bar. In other laminating embodiments, various other parameters and conditions are used. In other embodiments, other suitable adhesives 24 are used. Suitable adhesives that may be used as adhesive 24 are those that can penetrate the fabric forming the seam or hem to an extent sufficient to adhere to both the fabric and the elastic fibers of the yarns. As a result, the elastic fibers are held in place and no slippage occurs. In other embodiments, other methods for applying a suitable adhesive 24 to fabric 18 may be used. The adhesive 24 may include a backing sheet 26 that may be plastic, paper, or other suitable and typical materials.

In various embodiments, a laminated sample of fabric 18 cut into fabric strip 22 shown in Figure 3, is positioned on a seam or hem. Various methods for cutting the sample of composite material of fabric, adhesive 24 and backing sheet 26, to form fabric strip 22, may be used. In one embodiment, an ultrasonic welding process may be used. Ultrasonic welding processes advantageously provide the desirable aspect of simultaneously cutting and sealing an edge of the sample so that there is no fraying at the opposed edges 28 of fabric strip 22. In other embodiments, other suitable cutting techniques are used. Fabric strip 22 may be an elongate strip having a width determined in conjunction with the dimensions of the seam or hem that fabric strip 22 will be used to seal. In some embodiments, width 30 may be about 3 cm but in other embodiments, width 30 may vary from about 1 to 10 cm but still other dimensions are used in other embodiments.

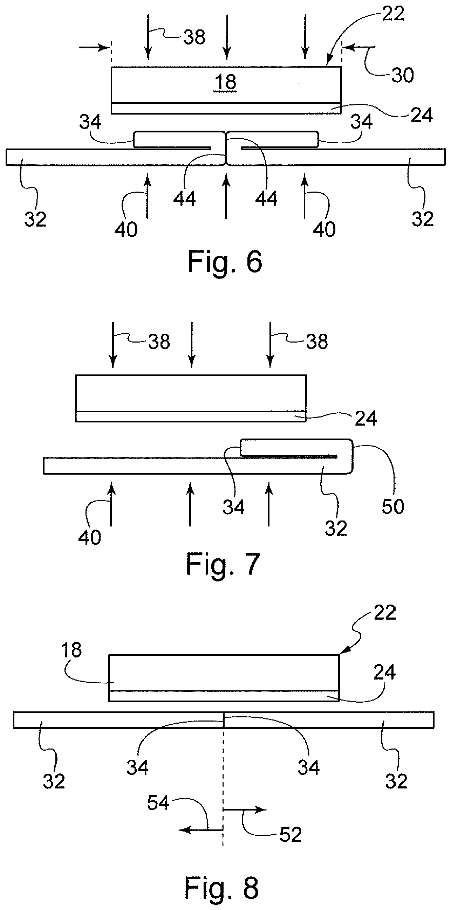

Figures 4 through 7 illustrate different embodiments of a subsequent step in the process for forming and sealing a seam or hem according to various embodiments of the disclosure. Figures 4 through 6 show an embodiment for sealing a seam and Figure 7 illustrates an embodiment for sealing a hem. Two pieces of fabric such as fabric 2 shown in Figure 2, are joined together at edges such as at edges 4 or 6 shown in Figure 2, to form a seam. The pieces of fabric each include fibers with ends that terminate at the edges that are joined to form a seam. The pieces of fabric may be joined together in various orientations such as shown in Figures 4 through 6. The seam may be formed by sewing or other suitable means. Various different sewing methods may be used in various embodiments.

Now turning to Figure 4, fabric pieces 32 are joined together at respective edges 34. In some embodiments, fabric pieces 32 may each be such as fabric 2 shown in Figure 2 and edges 34 may be edge 4 or edge 6 shown in Figure 2. Fabric pieces 32 each have fibers that have ends that are exposed and terminate at edges 34. In some embodiments, the two fabric pieces 32 are the same fabric material. In some embodiments, fabric pieces 32 represent pieces or panels cut from the same fabric sheet and in some embodiments fabric pieces 32 are each single ply pieces of fabric, i.e. an uncoated and unlaminated single layer of material. In other embodiments, fabric pieces 32 may be different types of fabrics and according to this embodiment, one or more of fabric pieces 32 may be a woven fabric with elastic and natural fibers such as fabric 2 as described above. The woven fabric may include fibers combined to form inelastic and elastic yarns formed of a single or multiple fiber types. Fabric pieces 32 are joined together at the seam to form various garments.

In Figure 4, fabric pieces 32 are joined together essentially end-to-end, and the edges 34 may be joined together by sewing to form a seam. Other techniques for joining edges 34 to one another may be used in other embodiments. Further arrangements of the edges 34 are shown in Figures 5 - 7. In some embodiments, the joined together fabric pieces 32 which may be in the form of a garment, may undergo a washing operation at this point after the formation of the seam, and in other embodiments, the washing operation is deferred until after fabric strip 22 is joined to the seam formed between fabric pieces 32.

Still referring to Figure 4, after backing sheet 26 is removed, fabric strip 22 is positioned over the already formed seam. Various methods including chemical and mechanical methods, may be used to remove the backing sheet 26 shown in Figure 3 to produce fabric strip 22 with adhesive 24 such as shown in Figures 4-7. Fabric strip 22 straddles the seam formed by joining fabric pieces 32. Fabric strip 22 is then affixed to the seam formed between fabric pieces 32. In some embodiments, pressure and heat are used to join affix fabric strip 22 to the seam, with pressure applied along the direction as indicated by arrows 38 and 40. In some embodiments, a heat welding machine is used and in another embodiment, a flat ironing press is used. In other embodiments, other methods for applying heat and pressure along the direction indicated by arrows 38 and 40 are used to affix fabric strip 22 to the seam arrangement such as shown in Figure 4. In the aforementioned and other embodiments, a temperature of about 140° C to about 170° C may be used to affix fabric strip 22 to the seam arrangement of fabric pieces 32 shown in Figure 4 and in some embodiments, a dwell time of about 20 to about 30 seconds may be used and a pressure of about 2.8 to about 4.2 bar may be used along the direction of arrows 38 and 40, but other methods and other parameters are used in other embodiments. The heat and pressure are used to join fabric strip 22 to the seam in a manner that causes the ends of the fibers that extend to edges 34 to become adhered or melted together. This is applicable to embodiments in which various elastic and inelastic fibers are used and which terminate at edges 34 and also true for embodiments in which yarns that include an elastic core and an inelastic covering sheath, terminate at edges 34. According to this embodiment in which there is an elastic core, it has been noted that the elastic core may advantageously melt to bond with the inelastic sheath covering such that neither of these elements pull away from the seam even under stress. In various embodiments, the elastic fibers are bonded at the edge and adhere to other fibers and therefore do not pull away from the seam or hem even under stress.

Figures 5 through 7 show other arrangements to which fabric strip 22 is joined to a form seam, such as described above. In Figure 5, the respective ends 34 of fabric pieces 32 overlap one another in overlap region 36 to form a seam. The overlapped ends 34 may be joined together by sewing or various other techniques and after the seam is formed by joining together ends 34, fabric strip 22 is affixed to the seam as described above. Width 30 of fabric strip 22 is chosen such that fabric strip 22 straddles the overlap region 36 and therefore the seam formed between fabric pieces 32.

Figure 6 illustrates another embodiment in which fabric strip 22 is used to seal a seam formed of two fabric pieces 32. In Figure 6, the edge portions of fabric pieces 32 are sewn together such that edges 34 do not face one another. In the embodiment of Figure 6, end faces 44 face each other and are joined to one another to contact one another and to form a seam as shown, by sewing or other suitable means. The two fabric pieces 32 may be first sewn together at locations near respective edges 34 then edges 34 folded to form folded end faces 44, or the two fabric pieces 32 may first be folded to produce folded end faces 44, then sewn together. The embodiment of Figure 6 also illustrates the advantageous feature that width 30 of fabric strip 22 is chosen such that fabric strip 22 extends past the folded edges 34 of fabric pieces 32, thereby straddling the seam including the folded edges 34. According to each of the embodiments shown in Figures 4 through 6, fabric strip 22 straddles of the seam and prevents damage, e.g. fibers pulling away from the seam, in both of the pieces of the single ply, i.e. uncoated and unlaminated fabric joined together to form the seam.

In addition to the seam arrangements shown in Figures 4 through 6, the respective edges 34 of the two fabric pieces 32 that are joined together to form a seam, may be arranged in various configurations other than those shown in Figures 4 through 6.

Figure 7 shows an embodiment in which a hem is formed such as at the edge of a garment e.g. the bottom of a pant leg. In Figure 7, the hem formed such as at outer edge 50 of a garment, is sealed by joining fabric strip 22 to the hem such as to cover edge 34 of fabric piece 32. According to this embodiment, fabric piece 32 is folded and sewn to form a hem with outer edge 50. Fabric strip 22 is then joined to the hem to cover edge 34 of fabric piece 32 using the techniques and methods described above.

Figure 8 shows the embodiment of Figure 4 after fabric strip 22 has been affixed to the two fabric pieces 32 according to the method and arrangement shown in

Figure 4. In some embodiments, adhesive 24 at least partially infiltrates or becomes absorbed in, each of fabric pieces 32 due to the heat and pressure used to join fabric strip 22 to the seam. The end portions of the fibers that extend to edges 34, and particularly the portions of fibers covered by fabric strip 22, advantageously become glued or melted together due to the adhesive and the elevated temperatures used to join the fabric strip 22 to the fabric. This includes the elastic fibers advantageously becoming glued to and/or melting to bond with the inelastic fibers including the sheath covering, such that neither of these elements will pull away from the seam formed as described above, even under stresses that occur when the garment is worn. Stated alternatively, the fibers that form fabric pieces 32 will be resistant to pulling back from the seam, i.e. will be resistant to pulling back along directions 52, 54 because of the advantages of the present invention.

It should be understood that, although not illustrated herein, according to each of the embodiments illustrated in Figures 5, 6 and 7, the processing aspect illustrated schematically in the respective figures, causes the fabric strip 22 to be adhered to, i.e. affixed to, the seam or hem thereby sealing the seam or hem and preventing slippage away from the hem as a result of gluing and melting the ends fibers of the fabric pieces at the seams. In this manner, both the elastic and inelastic fibers of fabric pieces 32 remain in fixed position relative to one another because pull-back is prevented.

Various garments are produced by joining together fabric pieces to produce the seams and hems described above, according to various embodiments of the disclosure. The garments formed of the stretchable fabric include various stretchable denim fabrics according to various embodiments.

In addition to the denim and other fabrics described above, the base fabric, i.e. fabric pieces 32 and fabric 18 used to form fabric strip 22, may include undyed fabrics, and all types of dyed fabrics including indigo, reactive, pigment, and sulphur overdyed fabrics. Additional fabrics that may be used as fabric pieces 32 and as fabric 18 to form garments of stretchable fabric, include fabrics that include the following fibers: cotton; and cotton with any of various selulosic fiber blends such as viscose, rayon, modal, and cupro (e.g. branded fibers like tencel). Further fabrics that may be used as fabric pieces 32 and fabric 18 include cotton and natural fibers such as linen, wool, cashmere, and cotton and manmade fiber blends such as polyesther, pbt, naylon 6.0, and nylon 6.6 (including branded fibers such as but not limited to cordura, t400, and the like). Further fabrics include fabrics made of manmade fibers as staples or filaments such as polyesther and nylon, various types of woven fabrics such as plain weave fabrics, twills, canvas (panama), sateen and dobby type woven fabrics made with the disclosed fibers. Further fabrics include various types of knitted fabrics that include the various fibers disclosed herein, and stretch woven fabrics with elasthane in the weft direction or the warp direction or in both the warp and weft directions. Further fabrics that may be used as fabric pieces 32 and fabric 18, and to produce various garments, include stretch knitted fabrics with any of various types of elastomeric fibers such as elasthane, pbt, t400 and polyesther. In various embodiments, the fabrics used as fabric pieces 32 and fabric 18 used to form fabric strip 22, may include weights ranging from 33,906 g/m² (1 oz/sqyd) to 474 g/m² (14 oz/sqyd), but this is provided by way of example only and in other embodiments, various other weights may be used.

According to various embodiments, multiple panels of fabric are joined together to form a garment that includes multiple seams and hems. In various embodiments, the garments formed of the stretchable fabric include various types of jeans, shirts, pants, tights, caps, shorts and various other types of workout and fashion apparel. The stretchable woven fabric may also be used to form a sleeve, a compression sock, or various bands or items worn on various locations on a wearer's body. Various other end products may be formed by joining together pieces of fabric 2.

This description of the embodiments is intended to be read in connection with the figures of the accompanying drawing, which are to be considered part of the entire written description. In the description, relative terms such as "lower," "upper," "horizontal," "vertical," "above," "below," "up," "down," "top" and "bottom" as well as derivatives thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

Although the invention has been described in terms of embodiments, it is not limited thereto. The invention is defined by the appended claims.

## Claims

1. A method for forming a seam or a hem in a fabric, comprising:
providing (1000) a woven fabric (2, 32) including a plurality of fibers (8), said plurality of fibers (8) including elastic and inelastic fibers;
sewing together (1002) an edge (34) of a first piece of said woven fabric (2, 32) to a second piece of said woven fabric (32), to form a seam or folding a fabric piece (32) and sewing it to form a hem with an outer edge (50);
laminating (1004) a third piece of fabric (18) with an adhesive material (24);
forming (1006) a strip (22) by cutting said third piece of fabric (18);
disposing (1010) said strip (22) along said seam or hem; and affixing (1012) said strip (22) to said seam or hem, wherein the hem is sealed by joining said strip (22) to the hem such as to cover edge (34) of fabric piece (32); wherein that said woven fabric (2, 32) is elastic and includes elastic yarns;
wherein said woven fabric (2, 32) is an uncoated and unlaminated single layer of fabric material; said plurality of fibers includes elastic and natural materials; and wherein said affixing (1012) said strip (22) to said seam or hem is carried out by using pressure and heat such that said fibers (8) formed of elastic materials adhere to said adhesive material (24).

2. The method as in claim 1, wherein said woven fabric (2, 32) comprises a single ply layer of fabric.

3. The method as in any preceding claim, wherein said plurality of fibers includes fibers having ends exposed at said edge (34) of said first piece of said woven fabric (2, 32) and fibers having ends exposed at an edge (34) of said second piece of said woven fabric (2, 32) and said sewing together comprises sewing together said edge (34) of said piece of said woven fabric (2, 32) and said edge (34) of said second piece of said woven fabric (2, 32).

4. The method as in any preceding claim, wherein and said woven fabric (2, 32) and said third piece of fabric (18) are formed of the same fabric material, preferably said same fabric material comprising denim.

5. The method as in any of claims 1-3, wherein said plurality of fibers comprises at least a stretchable yarn including a core of one or more elastomeric fibers, and an inelastic sheath of said natural fibers covering said core, preferably said inelastic fibers comprise cotton fibers.

6. The method as in any preceding claim, wherein said elastic fibers include elastic fibers with different degrees of elasticity.

7. The method as in any preceding claim, wherein said plurality of fibers (8) includes natural fibers and wherein said natural fibers comprise at least 65% of said plurality of fibers.

8. The method as in any previous claim, wherein said laminating includes said adhesive having a backing sheet comprising one of paper and plastic.

9. The method as in any previous claim, wherein said affixing includes using a heat welding machine or flat ironing press.

10. The method as in claim 1, wherein said laminating includes said adhesive (24) having a backing sheet, said disposing said strip (22) along said seam includes positioning said strip (22) to straddle said seam, and further comprising removing said backing sheet and washing said fabric prior to said disposing and said affixing.

11. The method as in any previous claim, wherein said sewing together an edge (34) comprises positioning said edge to overlap (36) an edge (34) of said second piece of fabric (32) then sewing together said overlapped edges.

12. The method as in any preceding claim, wherein said forming a strip (22) takes place using ultrasonic welding, preferably comprising sealing edges (28) of said strip (22) that takes place simultaneously to said forming a strip (22) using ultrasonic welding.

13. The method as in any preceding claim, wherein said affixing (1012) said strip (22) causes said elastic fibers to adhere to said adhesive material and not pull back from said seam.

14. A garment comprising a seam formed using the method of any of the preceding claims comprising pieces of woven fabric sewn together at seams, and the woven fabric (2, 32) includes a plurality of fibers (8), said plurality of fibers (8) includes elastic and inelastic fibers; said plurality of fibers includes elastic and natural materials; said woven fabric (2, 32) is elastic and includes elastic yarns, wherein said woven fabric is an uncoated and unlaminated single layer of fabric material, wherein a strip of a fabric, laminated with an adhesive material, is affixed to said seams of said woven fabrics.

15. A garment as in claim 14, **characterized in** comprising a hem, formed using the method of any of the preceding claims, with an outer edge (50) of a fabric piece, which is folded and sewn.

## Patentansprüche

1. Verfahren zum Bilden einer Naht oder eines Saumes in einem Gewebe, umfassend:
Bereitstellen (1000) eines Gewebes (2, 32) mit einer Vielzahl von Fasern (8),
wobei die Vielzahl von Fasern (8) elastische und unelastische Fasern umfasst;
Zusammennähen (1002) eines Randes (34) eines ersten Stücks des Gewebes (2, 32) mit einem zweiten Stück des Gewebes (32), um eine Naht zu bilden oder um ein Gewebestück (32) zu falten und es zu nähen, um einen Saum mit einem äußeren Rand (50) zu bilden;
Laminieren (1004) eines dritten Gewebestückes (18) mit einem Klebematerial (24);
Bilden (1006) eines Streifens (22) durch Schneiden des dritten Gewebestückes (18);
Anordnen (1010) des Streifens (22) entlang der Naht oder des Saumes; und Befestigen (1012) des Streifens (22) an der Naht oder dem Saum, wobei der Saum durch Verbinden des Streifens (22) mit dem Saum verschlossen wird, so dass der Rand (34) des Gewebestückes (32) bedeckt wird;
wobei das Gewebe (2, 32) elastisch ist und elastische Fasern enthält;
wobei das Gewebe (2, 32) eine unbeschichtete und nicht laminierte Einzelschicht aus Gewebematerial ist; wobei die Vielzahl von Fasern elastische und natürliche Materialien enthält; und wobei das Befestigen (1012) des Streifens (22) an der Naht oder dem Saum durch Druck und Wärme durchgeführt wird, so dass die aus elastischen Materialien gebildeten Fasern (8) an dem Klebematerial (24) haften.

2. Verfahren nach Anspruch 1, wobei das Gewebe (2, 32) eine einlagige Stofflage umfasst.

3. Verfahren nach einem der vorhergehenden Ansprüche, wobei die Vielzahl von Fasern Fasern mit an dem Rand (34) des ersten Stücks des Gewebes (2, 32) freiliegenden Enden und Fasern mit an einem Rand (34) des zweiten Stücks des Gewebes (2, 32) freiliegenden Enden enthält und das Zusammennähen das Zusammennähen der Ränder (34) des Stücks des Gewebes (2, 32) und des Randes (34) des zweiten Stücks des Gewebes (2, 32) umfasst.

4. Verfahren nach einem der vorhergehenden Ansprüche, wobei das Gewebe (2, 32) und das dritte Gewebestück (18) aus dem gleichen Gewebematerial gebildet sind, wobei das gleiche Gewebematerial vorzugsweise Denim umfasst.

5. Verfahren nach einem der Ansprüche 1 bis 3, wobei die Vielzahl von Fasern mindestens ein dehnbares Garn umfasst, das einen Kern aus einer oder mehreren elastomeren Fasern und eine unelastische Hülle der natürlichen Fasern, die den Kern bedeckt, umfasst, wobei die unelastischen Fasern Baumwollfasern umfassen.

6. Verfahren nach einem der vorhergehenden Ansprüche, wobei die elastischen Fasern elastische Fasern mit unterschiedlichen Elastizitätsgraden einschließen.

7. Verfahren nach einem der vorhergehenden Ansprüche, wobei die Vielzahl von Fasern (8) natürliche Fasern einschließen und wobei die natürlichen Fasern mindestens 65% der Vielzahl von Fasern umfassen.

8. Verfahren nach einem der vorhergehenden Ansprüche, wobei das Laminieren einschließt, dass der Klebstoff ein Trägersheet aufweist, die entweder Papier oder Kunststoff umfasst.

9. Verfahren nach einem der vorangehenden Ansprüche, wobei das Befestigen die Verwendung einer Wärmeschweißmaschine oder einer Flachbügelpresse einschließt.

10. Verfahren nach Anspruch 1, wobei das Laminieren einschließt, dass der Klebstoff (24) ein Stützsheet aufweist, das Anordnen des Streifens (24) entlang der Naht das Positionieren des Streifens (22) einschließt, um die Naht zu überspannen, und ferner das Entfernen des Stützsheets und das Waschen des Gewebes vor dem Anordnen und dem Befestigen umfasst.

11. Verfahren nach einem der vorhergehenden Ansprüche, wobei das Zusammennähen eines Randes (34) das Positionieren des Randes zum Überlappen (36) eines Randes (34) des zweiten Gewebestücks (32) und das anschließende Zusammennähen der überlappten Ränder umfasst.

12. Verfahren nach einem der vorhergehenden Ansprüche, wobei das Bilden eines Streifens (22) unter Verwendung von Ultraschallschweißen stattfindet, wobei vorzugsweise das Verschließen der Ränder (28) des Streifens (22) und das Bilden des Streifens (22) unter Verwendung von Ultraschallschweißen gleichzeitig stattfindet.

13. Verfahren nach einem der vorhergehenden Ansprüche, wobei das Befestigen (1012) des Streifens (22) bewirkt, dass die elastischen Fasern an dem Klebematerial haften und sich nicht von der Naht zurückziehen.

14. Kleidungsstück, umfassend eine unter Verwendung des Verfahrens nach einem der vorhergehenden Ansprüche gebildete Naht, umfassend Stücke von Gewebe, die an der Naht zusammengenäht sind, und wobei das Gewebe (2, 32) eine Vielzahl von Fasern (8) einschließt, wobei die Vielzahl von Geweben (8) elastische und unelastische Gewebe enthält; wobei die Vielzahl von Geweben elastische und natürliche Materialien enthält; wobei das Gewebe (2, 32) elastisch ist und elastische Garne enthält, wobei das Gewebe eine unbeschichtete und nicht laminierte Einzelschicht von Gewebe ist, wobei ein Streifen eines Gewebes, laminiert mit einem Klebematerial, an den Nähten des Gewebes befestigt wird.

15. Kleidungsstück nach Anspruch 14, **dadurch gekennzeichnet, dass** es ein nach einem der vorhergehenden Ansprüchen gebildeter Saum mit einem äußeren Rand (50) eines Gewebestückes, der gefaltet und genäht ist, umfasst.

## Revendications

1. Procédé pour former une couture ou un ourlet dans un tissu, comprenant les étapes consistant à :
fournir (1000) un tissu tissé (2, 32) comprenant une pluralité de fibres (8), ladite pluralité de fibres (8) comprenant des fibres élastiques et inélastiques ;
coudre ensemble (1002) un bord (34) d'une première pièce dudit tissu tissé (2, 32) à une deuxième pièce dudit tissu tissé (32), pour former une couture ou plier une pièce de tissu (32) et la coudre pour former un ourlet avec un bord extérieur (50) ;
stratifier (1004) une troisième pièce de tissu (18) avec un matériau adhésif (24) ;
former (1006) une bande (22) en coupant ladite troisième pièce de tissu (18) ;
disposer (1010) ladite bande (22) le long de ladite couture ou dudit ourlet ; et fixer (1012) ladite bande (22) à ladite couture ou audit ourlet, dans lequel l'ourlet est scellé en joignant ladite bande (22) à l'ourlet de manière à couvrir le bord (34) de la pièce de tissu (32) ;
dans lequel ledit tissu tissé (2, 32) est élastique et comprend des fils élastiques ; dans lequel ledit tissu tissé (2, 32) est une couche unique non revêtue et non stratifiée de matériau de tissu ; ladite pluralité de fibres comprend des matériaux élastiques et naturels ; et dans lequel
ladite étape consistant à fixer (1012) ladite bande (22) à ladite couture ou audit ourlet est effectuée en utilisant une pression et une chaleur telles que lesdites fibres (8) formées de matériaux élastiques adhèrent audit matériau adhésif (24).

2. Procédé selon la revendication 1, dans lequel ledit tissu tissé (2, 32) comprend une couche de tissu à une seule épaisseur.

3. Procédé selon l'une quelconque des revendications précédentes, dans lequel ladite pluralité de fibres comprend des fibres ayant des extrémités exposées au niveau dudit bord (34) de ladite première pièce dudit tissu tissé (2, 32) et des fibres ayant des extrémités exposées au niveau d'un bord (34) de ladite deuxième pièce dudit tissu tissé (2, 32) et ladite étape consistant à coudre ensemble comprend la couture ensemble dudit bord (34) de ladite pièce dudit tissu tissé (2, 32) et dudit bord (34) de ladite deuxième pièce dudit tissu tissé (2, 32).

4. Procédé selon l'une quelconque des revendications précédentes, dans lequel ledit tissu tissé (2, 32) et ladite troisième pièce de tissu (18) sont formées du même matériau de tissu, de préférence ledit même matériau de tissu comprenant du denim.

5. Procédé selon l'une quelconque des revendications 1 à 3, dans lequel ladite pluralité de fibres comprend au moins un fil étirable comprenant un noyau d'une ou plusieurs fibres élastomères, et une gaine inélastique desdites fibres naturelles couvrant ledit noyau, de préférence lesdites fibres inélastiques comprennent des fibres de coton.

6. Procédé selon l'une quelconque des revendications précédentes, dans lequel lesdites fibres élastiques comprennent des fibres élastiques avec différents degrés d'élasticité.

7. Procédé selon l'une quelconque des revendications précédentes, dans lequel ladite pluralité de fibres (8) comprend des fibres naturelles et dans lequel lesdites fibres naturelles comprennent au moins 65% de ladite pluralité de fibres.

8. Procédé selon l'une quelconque des revendications précédentes, dans lequel ladite stratification comprend ledit adhésif ayant une feuille de support comprenant un élément parmi le papier et le plastique.

9. Procédé selon l'une quelconque des revendications précédentes, dans lequel ladite étape de fixation comprend l'utilisation d'une machine à souder à chaud ou d'une presse à repasser à plat.

10. Procédé selon la revendication 1, dans lequel ladite stratification comprend ledit adhésif (24) ayant une feuille de support, ladite disposition de ladite bande (22) le long de ladite couture comprend le positionnement de ladite bande (22) pour chevaucher ladite couture, et comprend en outre le retrait de ladite feuille de support et le lavage dudit tissu avant ladite disposition et ladite fixation.

11. Procédé selon l'une quelconque des revendications précédentes, dans lequel ladite étape consistant à coudre ensemble un bord (34) comprend le positionnement dudit bord pour chevaucher (36) un bord (34) de ladite deuxième pièce de tissu (32) puis la couture ensemble desdits bords chevauchés.

12. Procédé selon l'une quelconque des revendications précédentes, dans lequel ladite formation d'une bande (22) a lieu en utilisant le soudage par ultrasons, comprenant de préférence le scellement des bords (28) de ladite bande (22) qui a lieu simultanément à ladite formation d'une bande (22) en utilisant le soudage par ultrasons.

13. Procédé selon l'une quelconque des revendications précédentes, dans lequel ladite fixation (1012) de ladite bande (22) amène lesdites fibres élastiques à adhérer audit matériau adhésif et à ne pas se retirer de ladite couture.

14. Vêtement comprenant une couture formée en utilisant le procédé selon l'une quelconque des revendications précédentes comprenant des pièces de tissu tissé cousues ensemble au niveau des coutures, et le tissu tissé (2, 32) comprend une pluralité de fibres (8), ladite pluralité de fibres (8) comprend des fibres élastiques et inélastiques ; ladite pluralité de fibres comprend des matériaux élastiques et naturels ; ledit tissu tissé (2, 32) est élastique et comprend des fils élastiques,
dans lequel ledit tissu tissé est une couche unique non revêtue et non stratifiée de matériau de tissu, dans lequel une bande de tissu, stratifiée avec un matériau adhésif, est fixée auxdites coutures desdits tissus tissés.

15. Vêtement selon la revendication 14, **caractérisé en ce qu'**il comprend un ourlet formé en utilisant le procédé selon l'une quelconque des revendications précédentes, avec un bord extérieur (50) d'une pièce de tissu, qui est plié et cousu.
